# EUROPÄISCHE PATENTSCHRIFT

(11) **EP 1 872 916 B1**
(45) Veröffentlichungstag und Bekanntmachung des Hinweises auf die Patenterteilung: **21.12.2011**
(21) Anmeldenummer: 07107536.0
(22) Anmeldetag: 04.05.2007
(51) Int. Cl.: B25F 5/00, B23Q 11/00, B25D 16/00

(54) **Elektrohandwerkzeugmaschine mit Saugmodul für eine Staubabscheidevorrichtung**
Handheld electrical tool with a suction module for a dust separation device
Machine-outil électromanuelle dotée d'un module d'aspiration pour un dispositif de coupe de la poussière

(30) Priorität: 28.06.2006 DE 102006029626
(43) Veröffentlichungstag der Anmeldung: 02.01.2008
(73) Patentinhaber: ROBERT BOSCH GMBH, 70442 Stuttgart (DE)
(72) Erfinder: Baumann, Otto, 70771, Leinfelden-Echterdingen (DE); Bernhardt, Thomas, 72631, Aichtal-Groetzingen (DE); Schmid, Hardy, 70563, Stuttgart (DE); Lennartz, Juergen, 73760, Ostfildern (DE); Bochert, Juergen, 70565, Stuttgart (DE)

(56) Entgegenhaltungen:
- EP-A1- 0 558 994
- EP-A1- 1 240 976
- EP-A1- 1 477 273
- DE-A1- 10 342 507
- DE-A1- 10 346 207
- DE-A1- 19 603 528

## Beschreibung

Die Erfindung betrifft eine Elektrohandwerkzeugmaschine, insbesondere eine Bohrmaschine, eine Schlagbohrmaschine oder einen Bohrhammer, gemäss dem Oberbegriff des Patentanspruchs 1.

Eine derartige Elektrohandwerkzeugmaschine geht beispielsweise aus der EP 0 558 994 A1 hervor.

Die Verwendung eines Elektrohandwerkzeugs, das beispielsweise als Schlagbohrmaschine ausgebildet ist, führt zum Anfall von Bohrmaterial. Beim Bohren von Stein, Beton und so weiter ist dieses Bohrmaterial besonders abrasiv und führt überdies zur Verschmutzung. Es ist deshalb bekannt, einem derartigen Elektrohandwerkzeug eine Abscheidevorrichtung zuzuordnen, um eine Verschmutzung durch Absaugung des anfallenden Materials (nachstehend Bearbeitungsstaub genannt) zu vermeiden.

Es sind Abscheidevorrichtungen für die Zuordnung zu Elektrohandwerkzeugmaschinen bekannt, die ein Sauglüfterrad aufweisen, das über eine Zapfwelle der Elektrohandwerkzeugmaschine angetrieben wird. Ferner sind Saugvorrichtungen bekannt, die ein Sauglüfterrad aufweisen, das von einem Sauglüfter-Elektromotor angetrieben wird. Dem Sauglüfter-Elektromotor wird über eine elektrische Steckkontaktvorrichtung die zum Betrieb notwendige elektrische Energie zugeführt. Die Steckkontaktvorrichtung kuppelt mit einer Gegenkontaktvorrichtung der Elektrohandwerkzeugmaschine beim Kuppeln der beiden Einrichtungen.

Schließlich ist eine Elektrohandwerkzeugmaschine bekannt, die eine Saugeinrichtung für das Fördern von Bearbeitungsstaub aufweist. Der Bearbeitungsstaub wird durch die Saugeinrichtung hindurchgeführt und in einem stromabwärts gelegenen Abscheidesack abgeschieden. Da der Bearbeitungsstaub in der Saugluft abrasiv wirkt, ist das Sauglüfterrad der bekannten Einrichtung aus Metall, vorzugsweise Aluminium hergestellt; wodurch entsprechende Kosten auftreten. Ferner sind die Bauabmessungen der Saugeinrichtung derart groß gewählt, dass es nicht zu einer Verstopfung durch den Bearbeitungsstaub kommt, der auch größere Teile, wie Kiesel, Mörtelbrocken, Betonsplitter und so weiter enthalten kann (Bearbeitungsmaterial). Aufgrund der großen Bauabmessungen der bekannten Saugeinrichtung leidet die Handhabbarkeit der Elektrohandwerkzeugmaschine.

Eine derartige Handwerzeugmaschine ist aus EP 0 558 994 A1 bekannt.

### Offenbarung der Erfindung

Die Erfindung ist im Anspruch 1 angegeben.

Bei der erfindungsgemäßen Elektrohandwerkzeugmaschine besteht der Vorteil, dass ein erstes Funktionsteil und ein zweites Funktionsteil vorgesehen ist, wobei die beiden Funktionsteile über ein Saugmodul miteinander verbunden sind, das einen Unterdruckanschluss zur Kopplung mit einer von der Elektrohandwerkzeugmaschine abnehmbaren, eine Abscheidung von Bearbeitungsmaterial vornehmenden Abscheidevorrichtung aufweist, wobei das Saugmodul der Abscheidevorrichtung strömungstechnisch in Bezug auf einem Saugluftstrom nachgeschaltet ist. Demgemäß liegt ein Saugmodul, also eine Baueinheit vor, die zwischen den beiden Funktionsteilen der Elektrohandwerkzeugmaschine angeordnet ist. Die beiden Funktionsteile sind dadurch gekennzeichnet, dass sie unterschiedliche Funktionen der Elektrohandwerkzeugmaschine erfüllen. Im Betrieb stehen die beiden Funktionsteile miteinander in Wechselwirkung. Die Anordnung ist vorzugsweise derart getroffen, dass bei der Herstellung gewählt wird, ob die Elektrohandwerkzeugmaschine mit oder ohne Saugmodul produziert wird. Die Produktion ohne Saugmodul führt dazu, dass die beiden Funktionsteile miteinander verbunden werden. Soll eine Elektrohandwerkzeugmaschine hergestellt werden, die ein Saugmodul aufweist, so wird dieses bei der Montage der Elektrohandwerkzeugmaschine zwischen dem ersten und dem zweiten Funktionsteil montiert. Aufgrund dieser Wahlmöglichkeit ist der Aufwand an Teilen minimiert, da keine Sonderversion zur Verfügung gestellt werden muss, wenn eine Elektrohandwerkzeugmaschine mit Saugmodul erstellt werden soll. Um eine lufttechnische Kopplung zwischen der der Elektrohandwerkzeugmaschine zuordenbaren Abscheidevorrichtung und dem Saugmodul vornehmen zu können, wobei diese Kopplung insbesondere selbsttätig erfolgt, wenn die Abscheidevorrichtung an der Elektrohandwerkzeugmaschine befestigt wird, ist das Saugmodul mit einem Unterdruckanschluss versehen, der mit einem entsprechenden Luftströmungsweg der Abscheidevorrichtung lösbar verbindbar ist. Die Abscheidevorrichtung ist derart ausgebildet, dass sie bereits die Abscheidung von Bearbeitungsmaterial mittels eines geeigneten Luftfilters oder dergleichen vornimmt, sodass gereinigte, also vom Bearbeitungsstaub befreite Saugluft aufgrund des von dem Saugmodul aufgebauten Unterdrucks den Luftströmungsweg passiert, zum Unterdruckanschluss gelangt, durch das Saugmodul, insbesondere dessen Sauglüfterrad, hindurchströmt und schließlich aus einem Auslass des Saugmoduls nach außen austritt. Da nur gereinigte, also bearbeitungsstaubfreie Luft vom Saugmodul gefördert wird, kann das Sauglüfterrad aus relativ weichem Material, beispielsweise aus Kunststoffmaterial, hergestellt sein.

Nach einer Weiterbildung der Erfindung ist vorgesehen, dass das Saugmodul als Scheibenelement ausgebildet ist. Hierunter ist zu verstehen, dass es -quasi wie eine Scheibe- zwischen dem ersten Funktionsteil und dem zweiten Funktionsteil der Elektrohandwerkzeugmaschine anordenbar ist, wodurch durch die Scheibendicke nur die Baulänge der Elektrohandwerkzeugmaschine vergrößert wird, nicht jedoch die Querschnittskontur.

Nach einer bevorzugten Ausführungsform der Erfindung ist vorgesehen, dass das Saugmodul eine Außenkontur aufweist, die den angrenzenden Außenkonturen der beiden Funktionsteile angepasst ist. Da die Außenkontur des Saugmoduls den angrenzenden Außenkonturen der beiden Funktionsteile angepasst ist, sodass ein im Wesentlichen stetiger Übergang vorliegt, wirkt das Saugmodul nicht optisch störend und vergrößert auch die Querschnittsabmessungen der Elektrohandwerkzeugmaschine nicht oder nicht nennenswert. Die Handhabbarkeit der Elektrohandwerkzeugmaschine bleibt daher voll erhalten. Sie wird lediglich in der Baulänge etwas vergrößert, wenn zwischen dem ersten und dem zweiten Funktionsteil das Saugmodul montiert ist.

Es ist vorgesehen, dass das Saugmodul ein wahlweise einbaubares Funktionserweiterungsmodul der Elektrohandwerkzeugmaschine ist. Hierauf wurde vorstehend bereits eingegangen. Es besteht demgemäß die Wahl, ob bei der Herstellung der Elektrohandwerkzeugmaschine ein Saugmodul mitverbaut werden soll oder ob die Elektrohandwerkzeugmaschine ohne Saugmodul gefertigt wird, wobei im letzteren Fall die beiden Funktionsteile direkt miteinander verbunden werden.

Das Saugmodul weist ein Sauglüfterrad auf, das mit der Motorwelle eines Elektromotors der Elektrohandwerkzeugmaschine gekuppelt ist. Demgemäß weist das Saugmodul selber kein Antriebsaggregat auf, sondern wird von dem Elektromotor der Elektrohandwerkzeugmaschine mit angetrieben. Hierbei ist vorgesehen, dass sich das Sauglüfterrad auf einer Welle befindet, wobei die Welle die beiden Funktionsteile der Elektrohandwerkzeugmaschine miteinander verbindet, sodass in beiden Funktionsteilen Antriebsenergie zur Verfügung steht und durch die Zwischenschaltung des Saugmoduls zwischen die beiden Funktionsteilen dennoch eine Drehmomentübertragung stattfindet. Hierbei ist eine aus mehreren Abschnitten zusammengesetzte Welle vorgesehen, d.h., durch die Zwischenschaltung des Saugmoduls wird durch die Welle des Sauglüfterrads die Motorwelle und/oder Getriebewelle der Elektrohandwerkzeugmaschine verlängert. Dementsprechend wird an den beiden Schnittstellen durch die Zwischenschaltung des Saugmoduls jeweils eine Drehmomentübertragungsvorrichtung realisiert. In einer Konstruktionsform, die nicht unter den Schutzumfang der Ansprüche fällt, ist der Motor mit einer verlängerten Ankerwelle versehen, d.h., es sind keine Schnittstellen realisiert, sondern es ist eine einstückige Konstruktion hinsichtlich der Motorwelle (Ankerwelle) vorgesehen, wobei die Motorwelle sowohl das Saugmodul als auch das Getriebe, das Schlagwerk usw. antreibt.

Es ist vorteilhaft, wenn das Saugmodul an gegenüberliegenden Seiten Anlageflächen für die beiden Funktionsteile aufweist, wobei die Anlageflächen eben beziehungsweise etwa eben, ausgebildet sind. Demzufolge liegen bei einer Ausgestaltung der Elektrohandwerkzeugmaschine ohne Saugmodul die entsprechenden Grenzflächen der beiden Funktionsteile plan aufeinander. Wird das Saugmodul dazwischengeschaltet, liegen jeweils die Anlageflächen des Saugmoduls an den Grenzflächen der beiden Funktionsteile an. Das Zusammenspannen der beiden Funktionsteile unter Zwischenschaltung des Saugmoduls erfolgt mit geeigneten konstruktiven Mitteln.

Eine Weiterbildung der Erfindung sieht vor, dass die Elektrohandwerkzeugmaschine in Pistolenbauweise ausgebildet ist. Hierbei ist ein Griffteil vorgesehen und ein winklig zum Griffteil verlaufendes Hauptteil, das ein Motorteil und ein Getriebeteil, gegebenenfalls mit Schlagwerk aufweist. Das Motorteil weist den bereits erwähnten Elektromotor auf, der zum Antrieb einer Werkzeugaufnahme dient. Die Werkzeugaufnahme befindet sich an dem Getriebeteil.

Von Vorteil ist es, wenn das erste Funktionsteil den Elektromotor aufweist (Motorteil). Es ist vorgesehen, dass das zweite Funktionsteil ein Getriebe und/oder ein Schlagwerk aufweist (Getriebeteil).

Nach einer Weiterbildung der Erfindung ist von Vorteil, wenn der Unterdruckanschluss spielausgleichende und/oder elastisch abdichtende Elemente aufweist. Durch den Spielausgleich und/oder die erwähnte Elastizität es stets eine dichte oder im Wesentlichen dichte lufttechnische Kupplung zwischen der Abscheidevorrichtung und dem Saugmodul sichergestellt, um den Saugluftstrom zu führen.

Ferner ist es vorteilhaft, wenn die Elemente Schiebesitzelemente sind, die eine Kupplung in Schieberichtung herstellen. Beim Zuordnen der Abscheidevorrichtung zur Elektrohandwerkzeugmaschine sind bevorzugt Rastmittel vorgesehen, die zur Verrastung eine Relativbewegung der beiden, zu verrastenden Baugruppen erfordern. Diese Relativbewegung erfolgt bevorzugt in Richtung der Drehachse des Elektromotors beziehungsweise der Drehachse der Werkzeugaufnahme, mit der Folge, dass die Öffnung des Unterdruckanschlusses des Saugmoduls eine Öffnungsebene aufweist, die sich ebenfalls in Richtung oder etwa in Richtung der vorstehend genannten Achsen erstreckt. Quer dazu ist die Dichtwirkung aufzubauen, um den lufttechnischen Saugweg zwischen Abscheidevorrichtung und Saugmodul zu erstellen. Durch die Ausbildung der Elemente als Schiebesitzelemente, werden spielausgleichende und/oder elastisch abdichtende Funktionen sicher erzielt.

Insbesondere kann vorgesehen sein, dass das zweite Funktionsteil einen Lagerflansch für Getriebe- und Schlagwerksbauteile aufweist, der an das Saugmodul angrenzt und von diesem luftgekühlt wird. Der Lagerflansch bildet demgemäß einen Kühlflansch. Die Saugluft des Saugmoduls beaufschlagt den Kühlflansch mit der Folge, dass die hierdurch erzeugte Kühlwirkung an das zweite Funktionsteil weitergegeben wird und dort enthaltene Baugruppen, wie beispielsweise ein Getriebe und/oder ein Schlagwerk, gekühlt, werden.

Schließlich betrifft die Erfindung eine Elektrohandwerkzeugmaschine mit einer zugeordneten Abscheidevorrichtung, wobei die Abscheidevorrichtung vorzugsweise von der Elektrohandwerkzeugmaschine abnehmbar ausgebildet ist. Sie wird demgemäß nur bei Bedarf der Elektrohandwerkzeugmaschine zugeordnet, insbesondere mit dieser lösbar verrastet.

### Kurze Beschreibung der Zeichnungen

Die Zeichnungen veranschaulichen die Erfindung anhand eines Ausführungsbeispiels und zwar zeigt:
- Figur 1: eine Seitenansicht einer als Schlagbohrmaschine oder Bohrhammer ausgebildeten Elektrohandwerkzeugmaschine,
- Figur 2: die Elektrohandwerkzeugmaschine der Figur 1 mit zugeordneter Abscheidevorrichtung und mit eingespanntem Werkzeug, insgesamt in perspektivischer Darstellung,
- Figur 3: eine Detailansicht der Elektrohandwerkzeugmaschine (teilweise geschnitten) und
- Figur 4: die Detailansicht der Figur 3 in perspektivischer Darstellung.

### Ausführungsform(en) der Erfindung

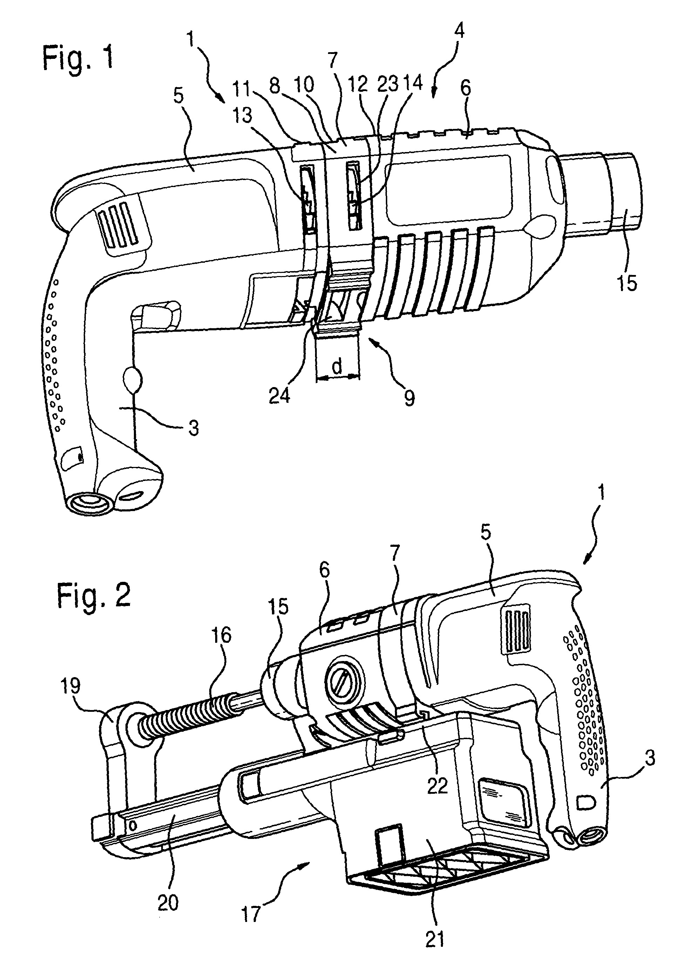

Figur 1 zeigt eine Elektrohandwerkzeugmaschine 1, die als Schlagbohrmaschine 2 oder Bohrhammer 2 ausgebildet ist. Sie weist eine Pistolenbauform aufgrund eines Griffteils 3 und eines winklig zum Griffteil 3 verlaufenden Hauptteil 4 auf, das ein Motorteil und ein Getriebeteil aufweist. Das Getriebeteil umfasst ein Schlagwerk. Das Motorteil bildet ein erstes Funktionsteil 5 und das Getriebeteil ein zweites Funktionsteil 6, wobei zwischen den beiden Funktionsteilen 5 und 6 ein Saugmodul 7 angeordnet ist. Das Saugmodul 7 ist als Scheibenelement 8 mit einer Dicke d ausgebildet. Die Querschnittskontur des ersten Funktionsteils 5 im angrenzenden Bereich an das Saugmodul 7 ist im Wesentlichen ebenso wie die Querschnittskontur des Scheibenelements 8 ausgebildet. Ferner entspricht die Querschnittskontur des an das Saugmodul 7 angrenzenden Bereichs des zweiten Funktionsteils 8 im Wesentlichen der Querschnittskontur des Saugmoduls 7, d.h., das Saugmodul 7 ist in die Formgebung der Elektrohandwerkzeugmaschine 1 formangepasst integriert. Lediglich im unteren Bereich 9 liegt eine gewisse Abweichung vor, da hier das Saugmodul etwas über die sonstige Kontur der Funktionsteile 5 und 6 hervorragt. Grundsätzlich ist jedoch anzumerken, dass die Außenkontur 10 des Saugmoduls 7 an angrenzende Außenkonturen 11 und 12 der beiden Funktionsteile 5 und 6 angepasst ist.

Das Motorteil 4 ist mit einem Elektromotor versehen, der sich im ersten Funktionsteil 5 befindet. Die Motorwelle des Elektromotors ist mit einem Kühllüfterrad 13 versehen, wodurch eine Motorkühlung bewirkt wird. Die Motorwelle ist ferner mit einer Kupplungswelle drehfest verbunden, die im Saugmodul 7 drehbar gelagert ist und auf der sich ein Sauglüfterrad 14 befindet. Ferner ist die Kupplungswelle mit einer Welle gekuppelt, die sich im zweiten Funktionsteil 6 befindet und dort ein Getriebe und ein Schlagwerk antreibt. Das Getriebe steht ausgangsseitig mit einer drehbaren Werkzeugaufnahme 15 in Verbindung, in die ein Werkzeug, beispielsweise ein Bohrer 16 (Figur 2), eingespannt werden kann. Insgesamt liegt damit eine verlängerte Motorwelle insofern vor, als die Motorwelle des Elektromotors des Funktionsteils 1 über die Kupplungswelle des Saugmoduls 7 mit der Welle des zweiten Funktionsteils 6 drehfest gekuppelt ist.

Der Figur 2 ist zu entnehmen, dass der Elektrohandwerkzeugmaschine 1 eine Abscheidevorrichtung 17 zuordenbar ist. Dies erfolgt durch Aufschieben der Abscheidevorrichtung 17 auf entsprechende Rasthaltemittel in Richtung des aus der Figur hervorgehenden Pfeils 18, also in Richtung der Achse der Werkzeugaufnahme beziehungsweise der Welle des Elektromotors. Sind die beiden Geräte miteinander rastend verkuppelt, so wird dadurch gleichzeitig ein Saugweg hergestellt. Dieser Saugweg verbindet ein Absaugauge 19 der Abscheldevorrichtung 17 mit einem teleskopierbaren Saugkanal 20, der über ein Staubabscheidegefäß 21 und einen Luftweg 22 zum Saugmodul 7 führt. Fällt bei der Bearbeitung eines Werkstücks mit dem Bohrer 16 Bearbeitungsstaub an, so wird dieser aufgrund der Saugwirkung des Saugmoduls 7 abgesaugt. Die mit Bearbeitungsstaub beaufschlagte Absaugluft gelangt vom Saugauge 19 über den Saugkanal 20 in das Staubabscheidegefäß 21, in dem sich ein Luftfilter, insbesondere ein Taschenfilter, befindet, sodass sich der Bearbeitungsstaub im Staubabscheidegefäß 21 sammelt. Die bearbeitungsstaubfreie Saugluft strömt dann durch den Luftweg 22 zum Sauglüfterrad 14 und tritt seitlich durch eine Abluftöffnung 23 aus der Elektrohandwerkzeugmaschine 1 aus. Zur Bildung des Luftwegs 22 ist auf der Oberseite des Staubabscheidegefäßes 21 eine entsprechende Luftauslassöffnung vorgesehen und das Saugmodul 7 weist eine dementsprechende Lufteinlassöffnung in Form eines Unterdruckanschlusses 24 (Figur 1) auf. Diese beiden Öffnungen koppeln sich selbsttätig beim Zuordnen der Abscheidevorrichtung 17 zur Elektrohandwerkzeugmaschine 1.

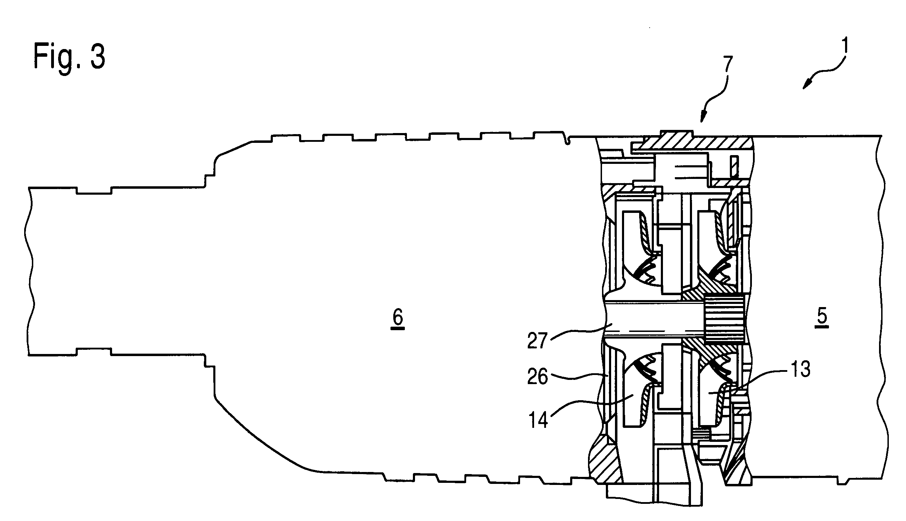

Die Figur 3 zeigt, dass das Saugmodul 7 das bereits erwähnte Sauglüfterrad 14 aufweist, das sich im Bereich eines Gehäuseflansches befindet, der ein Kühlflansch 26 bildet, und auf der Kupplungswelle 27 sitzt. Ist - als nicht unter den Schutzumfang der Ansprüche fallende Alternative - die Motorwelle einstückig und entsprechend lang ausgebildet, so ist auf ihr das Sauglüfterrad 14 angeordnet. Im Betrieb wird die Saugluft an dem Gehäuseflansch 26 vorbeigeführt, sodass dieser gekühlt wird. Hierdurch erfolgt eine Kühlung des Getriebes und des Schlagwerks, wobei sich diese beiden Baugruppen im zweiten Funktionsteil 6 befinden.

Hinsichtlich der auf der Motorwelle angeordneten Lüfterradbeschaufelung können entweder-wie bereits erläutert - zwei Lüfterräder vorgesehen sein, wovon das eine zur Kühlung des Motors dient (Kühllüfterrad 13) und das andere das Sauglüfterrad 14 bildet. Alternativ ist es auch möglich, eine Doppelbeschaufelung vorzunehmen, das heißt es ist nur ein Rad vorgesehen, das auf einer Seite eine erste Beschaufelung und auf der anderen Seite eine zweite Beschaufelung trägt. Die erste Beschaufelung dient zur Kühlung des Elektromotors und die andere Beschaufelung bildet das Sauglüfterrad des Saugmoduls 7.

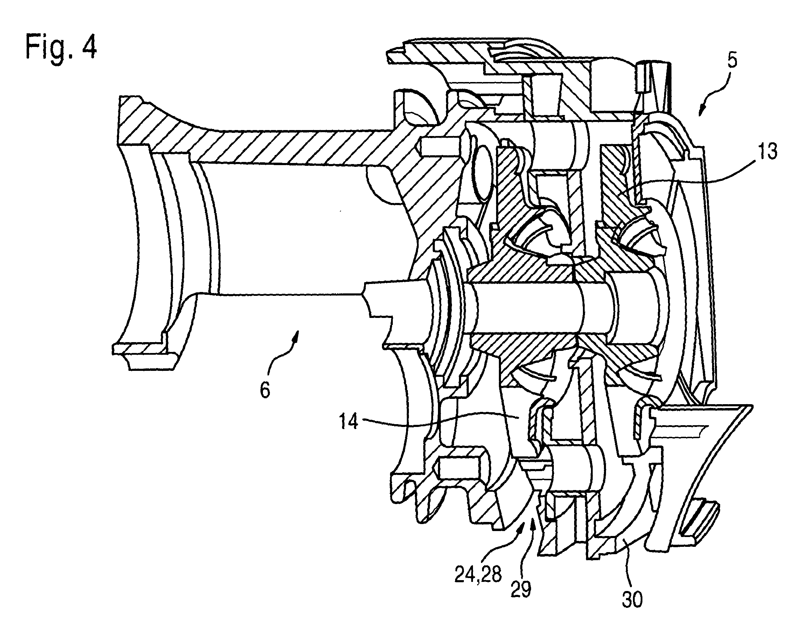

Die Figur 4 verdeutlicht die Darstellung der Figur 3 in perspektivischer Ansicht. Eine die Lufteinlassöffnung 24 bildende Saugöffnung 28 steht über einen zum Luftweg 22 gehörenden Saugkanal 29 mit dem Sauglüfterrad 14 in Verbindung. Erkennbar ist ferner eine Trennwand 30 zwischen dem Sauglüfterrad 14 und dem Kühllüfterrad 13.

Vorzugsweise kann vorgesehen sein, dass dem Unterdruckanschluss 24 oder stromabwärts zu diesem, jedoch vor dem Sauglüfterrad 14, ein Schutzgitter zugeordnet ist, um bei nicht an der Elektrohandwerkzeugmaschine befestigter Abscheidevorrichtung ein Ansaugen von Kleinmaterial zu verhindern, das zu einer Beschädigung des Sauglüfterrades 14 des Saugmoduls 7 führen könnte. Dieses Schutzgitter verhindert auch ein Eindringen von Kleinteilen in das Saugmodul, wenn die Abscheidevorrichtung defekt ist, beispielsweise ein Filterriss vorliegt, oder wenn ein Filter vergessen wurde. Das Schutzgitter kann insbesondere als Ringgitter ausgebildet sein, das um die Motorwelle - mit Abstand zu dieser - herumverläuft und ein Eindringen von Partikeln und dergleichen zum Sauglüfterrad 14 hin verhindert.

Hinsichtlich des Gehäuses des Elektrohandwerkzeugs, insbesondere der Schlagbohrmaschine oder des Bohrhammers, ist vorgesehen, dass sowohl das erste Funktionsteil 5 als auch das zweite Funktionsteil 6 jeweils in einem einstückigen topfförmigen Gehäusebereich angeordnet ist. Der entsprechende Topf kann sich - nach einem besonderen Ausführungsbeispiel - auch bis über das Saugmodul 7 erstrecken und das Saugmodulgehäuse mitbilden. Bevorzugt kann das dem Motorteil zugeordnete Gehäuseteil diese erwähnte Überlänge besitzen, um das Saugmodul mit aufzunehmen. Dem Saugmodul 7 kann alternativ auch ein eigener, separater Gehäusebereich zugeordnet sein, der im wesentlichen rohrförmig gestaltet ist. Anstelle der erwähnten topfförmigen Gehäuseausgestaltungen ist es auch möglich, Halbschalen zu verwenden, die jeweils zusammengesetzt das entsprechende Gehäuseteil bilden. Die Trennfugen zwischen den Halbschalen verläuft in Richtung der Längserstreckung der Schlagbohrmaschine beziehungsweise des Bohrhammers.

## Patentansprüche

1. Elektrohandwerkzeugmaschine, insbesondere Bohrmaschine, Schlagbohrmaschine oder Bohrhammer, mit einem ersten Funktionsteil (5) und einem zweiten Funktionstell (6), wobei die beiden Funktionsteile (5.6) über ein Saugmodul (7) miteinander verbunden sind, und mit einem die Elektrohandwerkzeugmaschine (1) antreibenden Elektromotor, wobei das erste Funktionsteil (5) den Elektromotor aufweist und das zweite Funktionsteil (6) ein Getriebe und/oder ein Schlagwerk, und wobei das selber kein Antriebsaggregat aufweisende Saugmodul (7) ein Sauglüfterrad (14) aufweist,
das mit einer Motorwelle des Elektromotors der Elektrohandwerkzeugmaschine (1) gekuppelt ist, **dadurch gekennzeichnet, dass** das Saugmodul (7) eine Kupplungswelle aufweist, die im Saugmodul (7) drehbar gelagert ist und auf der sich das Sauglüfterrad (14) befindet, wobei die Motorwelle mit der Kupplungswelle drehfest verbunden ist und die Kupplungswelle mit einer Welle gekuppelt ist, die sich im zweiten Funktionsteil (6) befindet und das Getriebe und/oder das Schlagwerk antreibt, wobei das Saugmodul (7) ein wahlweise einbaubares Funktionserweiterungsmodul der Elektrohandwerkzeugmaschine (1) ist, und wobei das Saugmodul (7) einen Unterdruckanschluss (24) zur Kopplung mit einer von der Elektrohandwerkzeugmaschine (1) abnehmbaren, eine Abscheidung von Bearbeitungsmaterial vornehmenden Abscheidevorrichtung (17) aufweist, wobei das Saugmodul (7) der Abscheidevorrichtung (17) strömungstechnisch in Bezug auf einen Saugluftstrom nachgeschaltet ist.

2. Elektrohandwerkzeugmaschine nach Anspruch 1, **dadurch gekennzeichnet, dass** Saugmodul (7) als Scheibenelement (8) ausgebildet ist.

3. Elektrohandwerkzeugmaschine nach einem de vorhergehenden Ansprüche, **dadurch gekennzeichnet, dass** das Saugmodul (7) eine Außenkontur (10) aufweist, die den angrenzenden Außenkonturen (11,12) der beiden Funktionsteile (5,6) angepasst ist.

4. Elektrohandwerkzeugmaschine nach einem der vorhergehenden Ansprüche, **dadurch gekennzeichnet, dass** das Saugmodul (17) an gegenüberliegenden Seiten Anlageflächen für die beiden Funktionsteile (5,6) aufweist, wobei die Anlageflächen eben ausgebildet sind.

5. Elektrohandwerkzeugmaschine nach einem der vorhergehenden Ansprüche, **gekennzeichnet durch** die Ausbildung in Pistolenbauweise aufgrund eines Griffteils (3) und eines winklig zum Griffteil (3) verlaufenden Hauptteils (4) mit Motorteil, Getriebeteil und Werkzeugaufnahme (15).

6. Elektrohandwerkzeugmaschine nach einem der vorhergehenden Ansprüche, **dadurch gekennzeichnet, dass** das erste Funktionsteil (5) den Elektromotor aufweist.

7. Elektrohandwerkzeugmaschine nach einem der vorhergehenden Ansprüche, **dadurch gekennzeichnet, dass** der Unterdruckanschluss (24) spielausgleichende und/oder elastisch abdichtende Elemente aufweist.

8. Elektrohandwerkzeugmaschine nach einem der vorhergehenden Ansprüche, **dadurch gekennzeichnet, dass** die Elemente Schiebesitzelemente sind, die eine Kupplung in Schieberichtung herstellen.

9. Elektrohandwerkzeugmaschine nach einem der vorhergehenden Ansprüche, **dadurch gekennzeichnet, dass** das zweite Funktionsteil (6) einen Kühlflansch (26) aufweist, der an das Saugmodul (17) angrenzt und von diesem luftgekühlt wird.

10. Elektrohandwerkzeugmaschine mit einer Abscheidevorrichtung, ausgebildet nach einem oder mehreren der vorhergehenden Ansprüche.

## Claims

1. Handheld electrical machine tool, in particular hand drill, percussion drill or hammer drill, with a first functional part (5) and a second functional part (6), wherein the two functional parts (5, 6) are connected to each other via a suction module (7), and with an electric motor driving the handheld electrical machine tool (1), wherein the first functional part (5) has the electric motor, and the second functional part (6) has a gearing and/or a percussion mechanism, and wherein the suction module (7) which does not itself have a drive unit has a suction fan wheel (14) which is coupled to a motor shaft of the electric motor of the handheld electrical machine tool (1), **characterized in that** the suction module (7) has a coupling shaft which is mounted rotatably in the suction module (7) and on which the suction fan wheel (14) is located, the motor shaft being connected to the coupling shaft for congruent rotation, and the coupling shaft being connected to a shaft which is located in the second functional part (6) and drives the gearing and/or the percussion mechanism, the suction module (7) being an optionally inbuilt function-expanding module of the handheld electrical machine tool (1), and the suction module (7) having a negative pressure connection (24) for coupling to a separation device (17) which can be removed from the handheld electrical machine tool (1) and separates processing material, the suction module (7) being connected downstream of the separation device (17) in terms of flow with regard to a suction airstream.

2. Handheld electrical machine tool according to Claim 1, **characterized in that** the suction module (7) is designed as a disc element (8).

3. Handheld electrical machine tool according to one of the preceding claims, **characterized in that** the suction module (7) has an outer contour (10) which is matched to the adjacent outer contours (11, 12) of the two functional parts (5, 6).

4. Handheld electrical machine tool according to one of the preceding claims, **characterized in that** the suction module (17) has, on opposite sides, contact surfaces for the two functional parts (5, 6), the contact surfaces being of flat design.

5. Handheld electrical machine tool according to one of the preceding claims, **characterized by** the design in a pistol-type construction owing to a handle part (3) and to a main part (4) which runs at an angle to the handle part (3) and has the motor part, gearing part and tool-holding fixture (15).

6. Handheld electrical machine tool according to one of the preceding claims, **characterized in that** the first functional part (5) has the electric motor.

7. Handheld electrical machine tool according to one of the preceding claims, **characterized in that** the negative pressure connection (24) has play-compensating and/or elastically sealing elements.

8. Handheld electrical machine tool according to one of the preceding claims, **characterized in that** the elements are sliding fit elements which produce a coupling in the sliding direction.

9. Handheld electrical machine tool according to one of the preceding claims, **characterized in that** the second functional part (6) has a cooling flange (26) which is adjacent to the suction module (17) and is air-cooled by the latter.

10. Handheld electrical machine tool with a separation device, designed according to one or more of the preceding claims.

## Revendications

1. Machine-outil à main électrique, en particulier perceuse, perceuse à percussion ou marteau perforateur, comprenant une première pièce fonctionnelle (5) et une deuxième pièce fonctionnelle (6), les deux pièces fonctionnelles (5, 6) étant connectées l'une à l'autre par le biais d'un module d'aspiration (7), et comprenant un moteur électrique entraînant la machine-outil à main électrique (1), la première pièce fonctionnelle (5) présentant le moteur électrique et la deuxième pièce fonctionnelle (6) présentant une transmission et/ou un mécanisme percuteur, et le module d'aspiration (7) ne présentant pas lui-même d'unité d'entraînement présentant une roue de ventilateur d'aspiration (14) qui est accouplée à un arbre de moteur du moteur électrique de la machine-outil à main électrique (1), **caractérisée en ce que** le module d'aspiration (7) présente un arbre d'accouplement qui est monté de manière rotative dans le module d'aspiration (7) et sur lequel se trouve la roue de ventilateur d'aspiration (14), l'arbre de moteur étant connecté de manière solidaire en rotation à l'arbre d'accouplement et l'arbre d'accouplement étant accouplé à un arbre qui se trouve dans la deuxième pièce fonctionnelle (6) et qui entraîne la transmission et/ou le mécanisme percuteur, le module d'aspiration (7) étant un module d'élargissement de fonction pouvant être installé en option, de la machine-outil à main électrique (1), et le module d'aspiration (7) présentant un raccord à dépression (24) destiné à être accouplé à un dispositif de séparation (17) pouvant être démonté de la machine-outil à main électrique (1), effectuant une élimination du matériau d'usinage, le module d'aspiration (7) du dispositif de séparation (17) étant monté en aval par rapport à un flux d'air d'aspiration, du point de vue de la technique d'écoulement.

2. Machine-outil à main électrique selon la revendication 1, **caractérisée en ce que** le module d'aspiration (7) est réalisé sous forme d'élément de disque (8).

3. Machine-outil à main électrique selon l'une quelconque des revendications précédentes, **caractérisée en ce que** le module d'aspiration (7) présente un contour extérieur (10) qui est adapté aux contours extérieurs adjacents (11, 12) des deux pièces fonctionnelles (5, 6).

4. Machine-outil à main électrique selon l'une quelconque des revendications précédentes, **caractérisée en ce que** le module d'aspiration (7) présente, sur des côtés opposés, des surfaces d'appui pour les deux pièces fonctionnelles (5, 6), les surfaces d'appui étant réalisées de manière plane.

5. Machine-outil à main électrique selon l'une quelconque des revendications précédentes, **caractérisée par** la réalisation à la manière d'un pistolet, sur la base d'une partie de préhension (3) et d'une partie principale (4) s'étendant suivant un certain angle par rapport à la partie de préhension (3), avec une partie de moteur, une partie de transmission et un porte-outil (15).

6. Machine-outil à main électrique selon l'une quelconque des revendications précédentes, **caractérisée en ce que** la première pièce fonctionnelle (5) présente le moteur électrique.

7. Machine-outil à main électrique selon l'une quelconque des revendications précédentes, **caractérisée en ce que** le raccord à dépression (24) présente des éléments de compensation du jeu et/ou à étanchéité élastique.

8. Machine-outil à main électrique selon l'une quelconque des revendications précédentes, **caractérisée en ce que** les éléments sont des éléments à siège coulissant, qui créent un accouplement dans la direction de coulissement.

9. Machine-outil à main électrique selon l'une quelconque des revendications précédentes, **caractérisée en ce que** la deuxième pièce fonctionnelle (6) présente une bride de refroidissement (26) qui est adjacente au module d'aspiration (17) et qui est refroidie par l'air au moyen de ce dernier.

10. Machine-outil à main électrique comprenant un dispositif de séparation, réalisé selon l'une quelconque ou plusieurs des revendications précédentes.
